# FASCICULE DE BREVET EUROPEEN

(11) **EP 2 631 159 B1**
(45) Date de publication et mention de la délivrance du brevet: **25.05.2016**
(21) Numéro de dépôt: 13154141.9
(22) Date de dépôt: 06.02.2013
(51) Int. Cl.: B62D 25/08, B60J 7/20

(54) **Système de structure de caisse de véhicule de type découvrable**
Karosserierstruktursystem eines Fahrzeugs vom Typ mit offenem Verdeck
Structural system for a convertible vehicle body

(30) Priorité: 27.02.2012 FR 1251743
(43) Date de publication de la demande: 28.08.2013
(73) Titulaire: PEUGEOT CITROËN AUTOMOBILES SA, 78140 Vélizy-Villacoublay (FR)
(72) Inventeur: Pascoa Dos Santos, Michel, 90000 Belfort (FR); Mauduit, Franck, 91490 Milly La Foret (FR)

(56) Documents cités:
- EP-A2- 0 985 594
- FR-A1- 2 921 870
- US-A- 5 054 847

## Description

La présente invention est relative à un système de structure de caisse de véhicule de type découvrable.

Plus particulièrement, l'invention concerne un système de structure de caisse de véhicule de type découvrable comprenant une structure latérale droite et une structure latérale gauche qui ont chacune une arche de pavillon prévue pour supporter un toit repliable pouvant se déplacer entre une position de fermeture du haut de l'habitacle du véhicule et une position d'ouverture du haut de l'habitacle. Cette structure de caisse a une ouverture supérieure qui est entre lesdites arches, en s'étendant de l'avant à l'arrière de l'habitacle, et qui est prévue pour être obturée par le toit occupant sa position de fermeture.

Le document FR2921870 décrit un tel système pourvu d'une traverse arrière de liaison des extrémités inférieures arrières des arches.

Le document EP2060425 décrit aussi un exemple d'un tel système, dans un véhicule découvrable qui nécessite des aménagements pour palier l'absence d'armature transversales de pavillon. Ce problème est particulièrement important quand le véhicule découvrable est dérivé d'un autre véhicule à pavillon tôlé, sur la base d'une plate forme commune à plusieurs véhicules. En outre, dans le cas d'un petit véhicule de type urbain, les accès pour fixer le volet d'accès au compartiment arrière sont souvent malaisés, du fait du peu de place disponible, ce qui complexifie la conception des renforts de caisse.

La présente invention a notamment pour but de remédier aux inconvénients de l'art antérieur et d'améliorer les solutions existantes.

A cet effet, l'invention est définie par l'objet de la revendication 1 et a pour objet un système de structure de caisse de véhicule de type découvrable comprenant une structure latérale droite et une structure latérale gauche qui ont chacune une arche de pavillon prévue pour supporter un toit repliable pouvant se déplacer entre une position de fermeture du haut de l'habitacle du véhicule et une position d'ouverture du haut de l'habitacle. La structure de caisse a une ouverture supérieure qui est entre lesdites arches, en s'étendant de l'avant à l'arrière de l'habitacle, et qui est prévue pour être obturée par le toit occupant sa position de fermeture. Sur l'arrière de l'ouverture supérieure de la structure de caisse pouvant être fermée par ledit toit repliable, la structure de caisse comprend un dispositif transversal d'ossature de liaison des structures latérales. Ce dispositif est pourvu d'une part d'une traverse arrière de liaison des extrémités inférieures arrière des arches et d'autre part d'une traverse avant de liaison des structures latérales devant lesdites extrémités inférieures arrière des arches, au dessus d'un compartiment arrière.

Dans divers modes de réalisation du système selon l'invention, on peut éventuellement avoir recours en outre à l'une et/ou à l'autre des dispositions suivantes :
- les traverses déterminent un espace d'accès par le haut du compartiment arrière ;
- la traverse arrière détermine un bord supérieur d'embouchure d'accès au compartiment arrière ;
- la traverse arrière est raccordée par ses extrémités à des doublures des structures latérales qui déterminent les bords latéraux de l'embouchure d'accès au compartiment arrière et qui supportent un volet destiné à fermer ladite embouchure, des unités dé commande du volet étant conformées pour être fixées auxdites doublures par un outil passant par l'espace d'accès déterminé entre les traverses ;
- les traverses déterminent une embase de support d'éléments de mécanisme d'actionnement du toit repliable ;
- une traverse supérieure de pare brise relie l'avant des arches, à l'avant de l'ouverture supérieure de la structure de caisse, la structure de caisse ayant son ouverture supérieure qui s'étend entre ladite traverse supérieure de pare brise et les traverses du dispositif transversal d'ossature ;
- le compartiment arrière est un compartiment à bagages délimité par la structure de caisse sous le dispositif transversal d'ossature et entre les structures latérales.

Par ailleurs, l'invention a également pour objet un véhicule automobile découvrable comportant un toit repliable pouvant se déplacer entre une position de fermeture du haut de l'habitacle du véhicule et une position d'ouverture du haut de l'habitacle, un système de structure de caisse comprenant une structure latérale droite et une structure latérale gauche qui ont chacune une arche de pavillon supportant le toit repliable, la structure de caisse ayant une ouverture supérieure qui est entre lesdites arches, en s'étendant de l'avant à l'arrière de l'habitacle, et qui est obturée par le toit occupant sa position de fermeture, et un compartiment arrière qui est derrière l'habitacle et qui reçoit des sièges susceptibles d'être utilisés par des occupants de l'habitacle. Dans ce véhicule, le système de structure de caisse est conforme à l'invention en ayant son dispositif transversal d'ossature à traverses situées au dessus dudit compartiment arrière.

D'autres buts, caractéristiques et avantages de l'invention apparaîtront au cours de la description suivante d'un de ses modes de réalisation, donné à titre d'exemple non limitatif, en regard des dessins schématiques joints.

Sur les dessins :
- la figure 1 est une vue en perspective de trois quarts arrière d'une partie de carrosserie de véhicule de type découvrable et d'une partie de sa structure de caisse ;
- la figure 2 est une vue conforme à la figure 1 représentant l'arrière de la caisse sans son toit découvrable, mais montrant le système de structure de caisse selon l'invention ;
- la figure 3 est une vue en perspective de trois quarts arrière d'un détail de la caisse, montrant de manière agrandie par rapport à la figure 2 le système de structure de caisse selon l'invention ;
- la figure 4 est une vue en perspective de trois quarts arrière agrandie par rapport à la figure 3, montrant le système de structure de caisse selon l'invention et des éléments de mécanisme d'actionnement du toit découvrable ;
- la figure 5 est une vue du type de la figure 1 et de la figure 3, représentant l'arrière de la caisse non équipée du toit découvrable mais pourvue d'un volet arrière de carrosserie en position de fermeture du coffre à bagages ;
- la figure 6 est une vue conforme à la figure 5 représentant l'arrière de la caisse, non équipée du volet arrière de carrosserie mais avec représentation d'unités de commande de ce volet.

Sur les différentes figures, les mêmes références désignent des éléments identiques ou similaires.

En se reportant aux figures, la référence 10 désigne un véhicule de type découvrable comprenant système de structure de caisse selon l'invention. Dans la description qui va suivre, la direction désignée comme longitudinale correspond à l'axe d'avancement d'un véhicule qui sert ici de référentiel.

Un tel système est destiné à rigidifier la structure de la caisse 11 qui est dépourvue de pavillon rigide puisqu'elle comporte à la place un toit repliable 12 permettant l'ouverture de l'habitacle vers le ciel. Ce toit 12 est de type toilé et il ressemble à un toit à lamelles car la toile est fixée sur des baleines transversales 12A ayant leurs extrémités libres montées à coulissement dans des guides latéraux qui sont solidaires du haut de la caisse 11. Ce type de toit et ses guides sont connus par exemple du document EP2060425.

La structure de caisse comporte classiquement une structure latérale droite et une structure latérale gauche comportant un panneau latéral 18 de côté de caisse qui constitue un panneau de carrosserie visible de l'extérieur quand le véhicule est assemblé et utilisable par son conducteur. Chaque structure latérale détermine usuellement un pied milieu 18M à l'avant d'une fenêtre de custode 21 et un pied arrière 18R incluant un retour transversal 18T appartenant au panneau latéral 18 de côté de caisse.

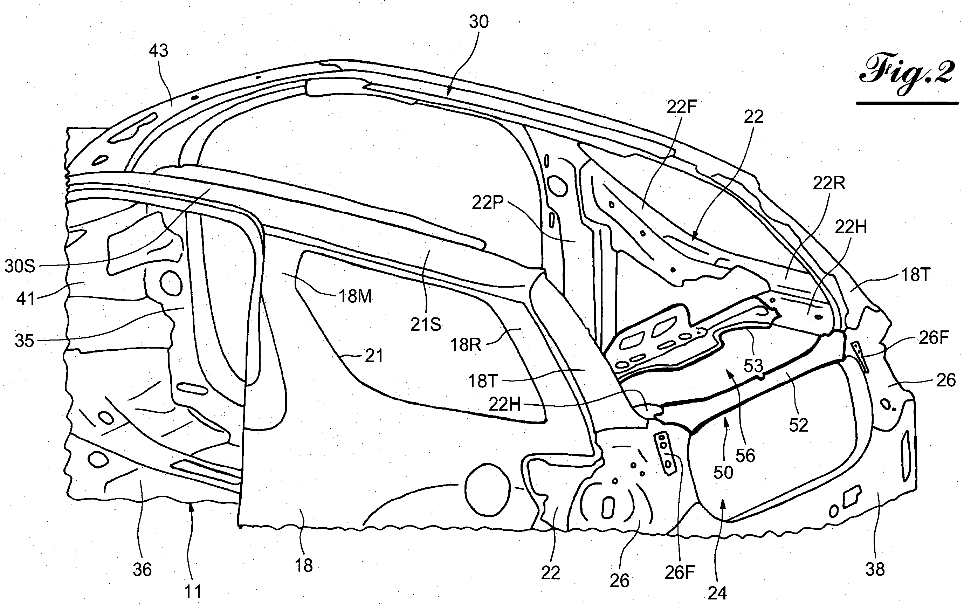

Chaque structure latérale comporte une doublure latérale 22 de renfort intérieur qui est masquée quand le véhicule est assemblé et utilisable par son conducteur. La doublure latérale 22 est bien visible à la figure 2 à laquelle sont représentées ses différentes portions.

Chaque doublure latérale 22 s'étend essentiellement verticalement en comprenant principalement une portion de doublure de pied milieu 22P, une portion avant 22F située en partie inférieure d'encadrement de la fenêtre de custode 21 et une portion arrière 22R située latéralement à un compartiment arrière du véhicule, en l'espèce le compartiment à bagages 24 du véhicule. La doublure latérale 22 comprend aussi une portion horizontale arrière 22H constituant un embryon de tablette arrière. La portion horizontale arrière 22H est située à l'avant du retour arrière 18T appartenant au panneau latéral 18 de côté de caisse et au dessus du compartiment à bagages.

Chaque structure latérale 16 comporte aussi une doublure intermédiaire arrière 26 constituant le bas du pied arrière 18R en étant destinée à supporter un bloc optique arrière.

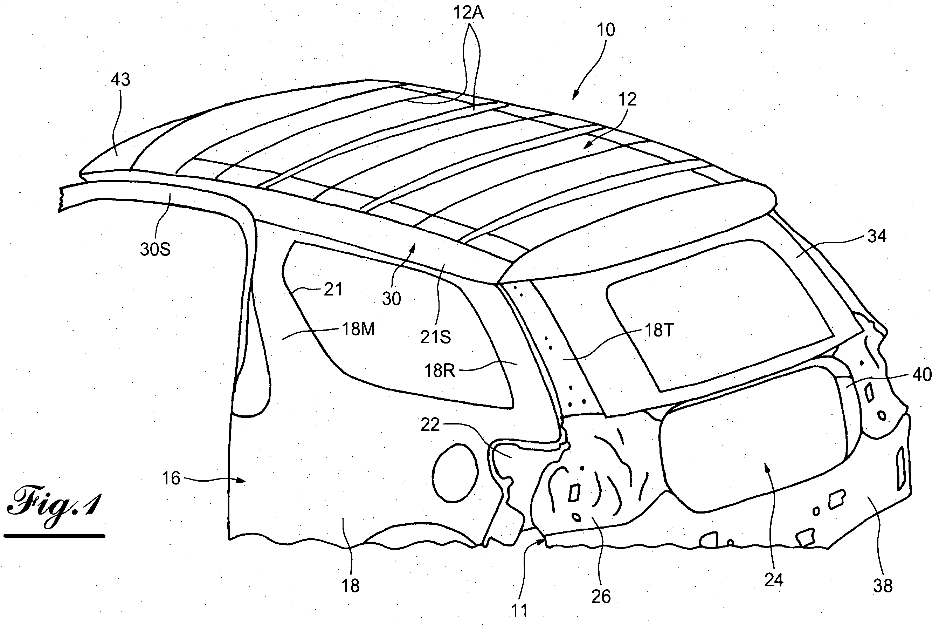

Chaque structure latérale 16 détermine une arche de pavillon 30 prévue pour supporter le toit repliable 12 pouvant se déplacer entre une position de fermeture du haut de l'habitacle du véhicule et une position d'ouverture du haut de l'habitacle. Une lunette arrière 34 est également repliable, en ayant des guides de repli qui sont aménagés dans le haut du pied arrière, derrière la fenêtre de custode. La figure 1 permet de bien représenter le toit 12 et la lunette arrière 34 dans leur environnement.

Le bas des structures latérales comporte aussi des doublures de pied avant 35, en continuité de montants avant d'encadrement de pare-brise. Le bas des structures latérales est solidaire d'un plancher 36 du véhicule. Le plancher 36 est lui-même solidaire d'une traverse inférieure arrière dont un élément vertical arrière 38 détermine avec les doublures intermédiaires arrière 26 le bas de l'embouchure 40 d'accès au compartiment à bagages.

Les arches 30 comportent les montants avant 30A d'encadrement de pare-brise, les portions supérieures 30S d'encadrement de porte, les portions supérieures 21S encadrement de la fenêtre de custode 21 et enfin le haut des pieds arrière 18R, à savoir l'arrière de l'encadrement de la fenêtre de custode.

Les arches 30 sont reliées entre elles à leur extrémité avant par le pied avant 35 et un tablier 41. A l'avant de l'habitacle, les arches 30 sont aussi reliées entre elles à leur portion avant en haut des montants avant d'encadrement de pare-brise, par une traverse supérieure 43 de baie de pare brise. La structure de caisse est ouverte, en haut de la caisse 11, entre lesdites arches 30 de l'avant à l'arrière de l'habitacle. En effet, il n'y a pas d'armature transversale en haut du pied milieu 18M, ni en haut du pied arrière 18R de la caisse.

La figure 2 permet de bien représenter la structure de caisse, y compris le bas des structures latérales et les montants de pied avant 35, de pied milieu 18M et de pied arrière 18R dans leur environnement incluant le plancher 36 et l'encadrement de baie de pare brise.

Dans le véhicule 10 à toit repliable 12, de nombreuses pièces structurantes sont absentes en comparaison avec un véhicule à pavillon tôlé. En effet, les arches 30 sont dépourvues de liaisons entre la traverse supérieure 43 d'encadrement de pare brise et leur extrémité arrière.

Comme le véhicule découvrable 10 comporte une plate forme du type de celle d'un véhicule à toit tôlé, la suppression de ces pièces fragilise l'ensemble de la caisse et nécessite d'adapter la caisse aux nouvelles contraintes, malgré la conservation des structures latérales d'origine, dont les arches de pavillon.

Pour compenser cette perte de rigidité, des pièces de renfort sont prévues plus bas que l'ouverture supérieure du pavillon présente entre les arches 30. Il s'agit de plusieurs pièces nouvelles dont un dispositif transversal d'ossature 50 de liaison à l'arrière des arches 30. Ce dispositif d'ossature 50 est conçu comme une tablette arrière en deux parties.

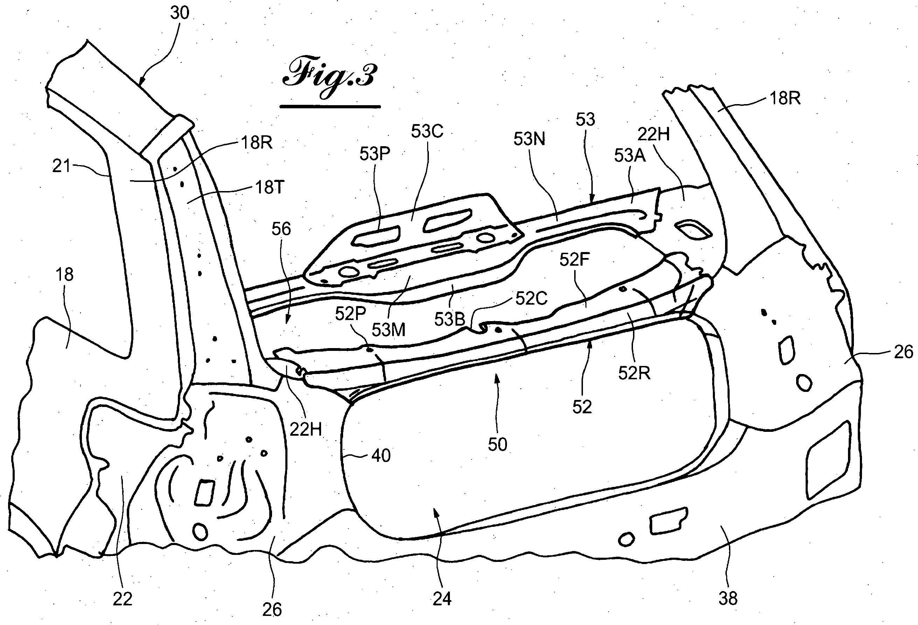

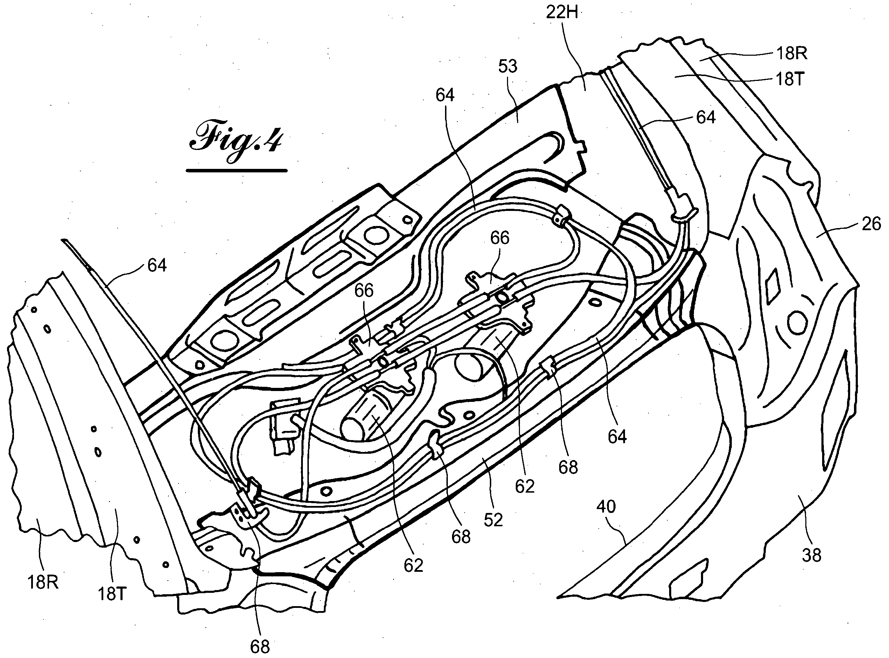

Dans le mode de réalisation qui est représenté à la figure 2, à la figure 3 et à la figure 4, le dispositif d'ossature 50 de liaison des structures latérales est d'une part pourvu d'une traverse arrière 52 de liaison des extrémités inférieures arrière des arches 30 et d'autre part pourvu d'une traverse avant 53 de liaison de l'arrière des structures latérales. En l'espèce la traverse arrière 52 et la traverse avant 53 sont longitudinalement distantes si bien qu'un espace de passage 56 est présent entre ces traverses au dessus du compartiment à bagages.

La traverse arrière 52 est globalement en forme de cornière en ayant un pan sensiblement horizontal avant 52F et un pan sensiblement vertical arrière 52R. Ces pans sont légèrement élargis à leur proximité avec les structures latérales de la caisse. Le pan horizontal avant 52F présente une encoche médiane avant 52C et divers perçages 52P permettant par exemple de fixer des équipements du véhicule.

La traverse arrière 52 est raccordée par ses extrémités aux structures latérales de la caisse. Le pan horizontal avant 52F est ainsi fixé à la portion horizontale arrière 22H constituant l'embryon de tablette arrière aménagé à la doublure latérale 22. Le pan vertical arrière 52R est fixé aux doublures intermédiaires arrière 26 au niveau de leurs coins supérieurs proches de l'embouchure 40 d'accès au compartiment à bagages 24. Le bord inférieur du pan vertical arrière 52R constitue d'ailleurs la limite supérieure de cette embouchure.

La traverse avant 53 comprend une plaque principale 53A sensiblement horizontale en ayant des reliefs tels que des nervures de renfort 53N ou repli de bordure 53B. Cette plaque 53A est plus grande longitudinalement à son tronçon médian 53M. La traverse avant 53 comprend aussi une cornière centrale 53C qui s'entend sur environ un tiers de la plaque 53A, à l'avant de son tronçon médian 53M, qui est pourvue d'orifices 53P et qui peut servir de support à des équipements du véhicule, par exemple associés à sa banquette arrière.

La traverse avant 53 est raccordée par ses extrémités aux structures latérales de la caisse. La plaque principale 53A est ainsi fixée à la portion horizontale arrière 22H constituant l'embryon de tablette arrière aménagé à la doublure latérale 22.

A la figure 3, la fixation des traverses 52 et 53 du dispositif d'ossature 50, tout comme leur conformation, sont bien visibles dans leur principe. Les traverses ont leur contour apparaissant souvent en trait plus marqué que les traits des autres pièces sur les figures. A cette figure, les arches 30 et, plus généralement les structures latérales, sont représentées partiellement pour plus de clarté.

L'espace de passage 56, qui est présent entre ces traverses au dessus du compartiment à bagages, est mis à profit pour l'implantation d'éléments de mécanisme d'actionnement du toit repliable 12, en l'espèce des moteurs 62 et des câbles de commande 64 dudit toit pour déplacer sa toile, ses baleines 12A et sa lunette 34 entre leur position de fermeture de l'habitacle du véhicule et leur position d'ouverture de l'habitacle. En outre, les traverses 52 et 53 sont aussi mises à profit pour servir d'embase de support des platines 66 ou des attaches 68 de fixation desdits éléments de mécanisme d'actionnement du toit.

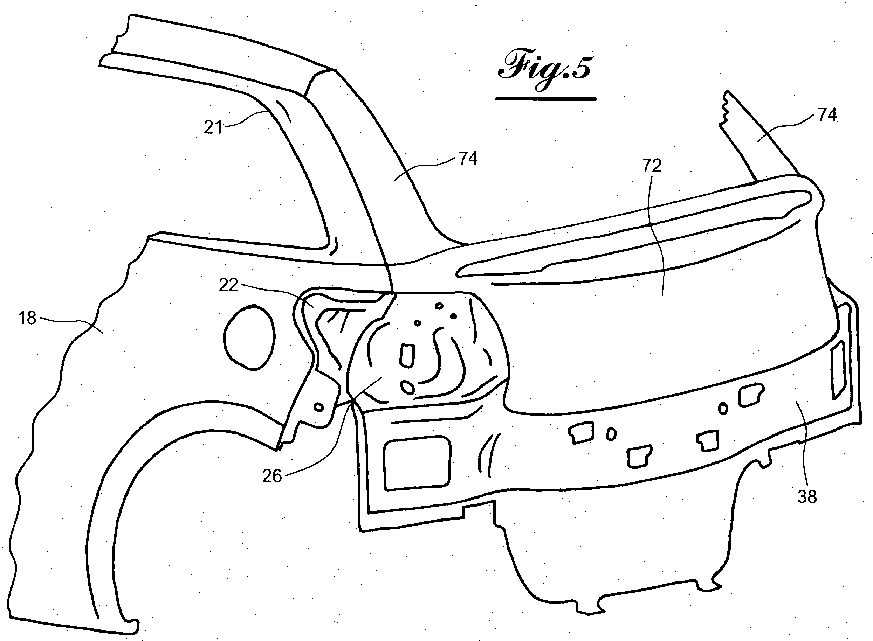

En plus, la carrosserie du véhicule 10 comporte un volet 72 qui est représenté à la figure 5. Le volet 72 constitue la porte du compartiment à bagages 24, pour l'obturation dé l'embouchure 40 d'accès audit compartiment. Le volet 72 est situé sous la lunette arrière 34 qui n'est pas représentée à la figure 5. De chaque côté de la lunette 34, des parements verticaux 74 habillent le haut du montant arrière, au dessus des bords supérieurs dudit volet.

Il est important que le volet 72 soit bien assemblé et bien aligné par rapport aux panneaux latéraux 18 de côté de caisse. Compte tenu des dimensions réduites du véhicule 10 qui est dans la catégorie des citadines, l'assemblage du volet par rapport à la caisse présente des contraintes qui sont minimisées en utilisant l'accès possible par l'espace de passage 56 présent entre les traverses 52 et 53 au dessus du compartiment à bagages 24. Ainsi, des unités de commande du volet 72, en l'espèce des unités à biellettes de débattement 76 et des unités de verrouillage 78, peuvent être fixées avec un accès correct.

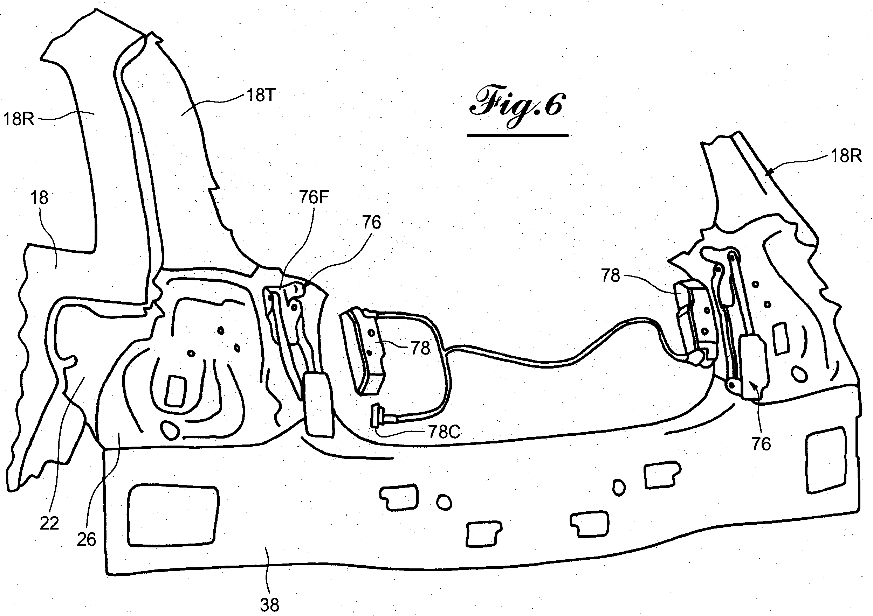

Ainsi, le volet 72 est monté à la caisse en étant équipé de ses unités à biellettes 76 et ce sont des étriers 76F de fixation qui sont à visser à des logements 26F aménagés dans les éléments de doublure intermédiaires arrière 26 (figure 2). En particulier, le volet est mis en position d'assemblage correct relativement à la caisse par un outillage de type connu, puis un opérateur vient visser des étriers 76F aux éléments de doublure intermédiaires arrière 26, en passant la visseuse par ledit espace 56 disponible entre les traverses. Le même accès est utilisé pour la connexion électrique du connecteur 78C raccordé aux unités de verrouillage 78. Pour plus de clarté, le volet n'est pas représenté à la figure 6, mais ses unités de commande sont visibles en position de montage dans le véhicule. L'espace 56 disponible entre les traverses 52 et 53 est aussi utilisable pour faire passer une pince à souder par exemple en cas de soudage des étriers 76F à la place de leur fixation par vissage.

Avantageusement, le principe d'architecture du dispositif d'ossature 50 permet l'utilisation des traverses sur une pluralité de véhicules.

Avantageusement, le principe d'architecture du dispositif d'ossature 50, à deux traverses de renforcement de rigidité de caisse, permet un gain important en poids et en perte matière, du fait de l'absence de grande découpe de milieu de grande plaque.

Avantageusement, la géométrie et la mise en jeux du coffre sur l'arrière de la carrosserie est facilitée par l'architecture du dispositif d'ossature 50 à deux traverses. En effet, le passage 56 entre les traverses permet la fixation des unités de commande du volet quand celui-ci est indexé en position de fermeture, avant installation des éléments de mécanisme d'actionnement du toit repliable.

Dans le mode de réalisation représenté et décrit précédemment, le compartiment arrière est un compartiment à bagages du véhicule, derrière l'habitacle pouvant recevoir des sièges susceptible d'être utilisés par des occupants de l'habitacle, mais ce compartiment recevoir des organes de motorisation dans le cas d'un véhicule à moteur arrière.

## Revendications

1. Système de structure de caisse de véhicule de type découvrable comprenant une structure latérale droite (18) et une structure latérale gauche (18) qui ont chacune une arche de pavillon (30) prévue pour supporter un toit repliable (12) pouvant se déplacer entre une position de fermeture du haut de l'habitacle du véhicule et une position d'ouverture du haut de l'habitacle, la structure de caisse ayant une ouverture supérieure qui est entre lesdites arches (30), en s'étendant de l'avant à l'arrière de l'habitacle, et qui est prévue pour être obturée par le toit (12) occupant sa position de fermeture, **caractérisé en ce que**, sur l'arrière de l'ouverture supérieure de la structure de caisse pouvant être fermée par ledit toit repliable, la structure de caisse comprend un dispositif transversal d'ossature (50) de liaison des structures latérales (18) pourvu d'une part d'une traverse arrière (52) de liaison des extrémités inférieures arrière des arches (30) globalement en forme de cornière en ayant un pan sensiblement horizontal avant (52F) et un pan sensiblement vertical arrière (52R) et d'autre part d'une traverse avant (53) de liaison des structures latérales (18) devant lesdites extrémités inférieures arrière des arches comprenant une plaque principale (53A) sensiblement horizontale en ayant des reliefs, au-dessus d'un compartiment arrière (24).

2. Système selon la revendication précédente, **caractérisé en ce que** les traverses (52, 53) déterminent un espace d'accès (56) par le haut du compartiment arrière (24).

3. Système selon l'une quelconque des revendications précédentes, **caractérisé en ce que** la traverse arrière (52) détermine un bord supérieur d'embouchure (40) d'accès au compartiment arrière (24).

4. Système selon la revendication 2 et la revendication 3, **caractérisé en ce que** la traverse arrière (52) est raccordée par ses extrémités à des doublures (22, 26) des structures latérales (18) qui déterminent les bords latéraux de l'embouchure (40) d'accès au compartiment arrière (24) et qui supportent un volet (72) destiné à fermer ladite embouchure, des unités de commande (78, 76) du volet étant conformées pour être fixées auxdites doublures par un outil passant par l'espace d'accès (56) déterminé entre les traverses (52, 53).

5. Système selon l'une quelconque des revendications précédentes, **caractérisé en ce que** les traverses (52, 53) déterminent une embase de support d'éléments (62, 64) de mécanisme d'actionnement du toit repliable (12).

6. Système selon l'une quelconque des revendications précédentes, **caractérisé en ce que**, à l'avant de l'ouverture supérieure de la structure de caisse, une traverse supérieure (43) de pare brise relie l'avant des arches (30), la structure de caisse ayant son ouverture supérieure qui s'étend entre ladite traverse supérieure (43) de pare brise et les traverses (52, 53) du dispositif transversal d'ossature (50).

7. Système selon l'une quelconque des revendications précédentes, **caractérisé en ce que** le compartiment arrière (24) est un compartiment à bagages délimité par la structure de caisse sous le dispositif transversal d'ossature (50) et entre les structures latérales (18).

8. Véhicule automobile découvrable comportant un toit repliable (12) pouvant se déplacer entre une position de fermeture du haut de l'habitacle du véhicule et une position d'ouverture du haut de l'habitacle, un système de structure de caisse comprenant une structure latérale droite (18) et une structure latérale gauche (18) qui ont chacune une arche (30) de pavillon supportant le toit repliable, la structure de caisse ayant une ouverture supérieure qui est entre lesdites arches (30) en s'étendant de l'avant à l'arrière de l'habitacle et qui est obturée par le toit occupant sa position de fermeture, et un compartiment arrière qui est derrière l'habitacle et qui reçoit des sièges susceptibles d'être utilisés par des occupants de l'habitacle, **caractérisé en ce que** le système de structure de caisse est conforme à l'une quelconque des revendications précédentes en ayant son dispositif transversal d'ossature (50) à traverses (52, 53) situées au dessus dudit compartiment arrière.

## Patentansprüche

1. Karosseriestruktursystem eines Fahrzeugs vom Typ mit offenem Verdeck, das eine rechte seitliche Struktur (18) und eine linke seitliche Struktur (18) umfasst, die jeweils einen Himmelbogen (30) haben, der vorgesehen ist, um ein zurückfaltbares Dach (12) zu tragen, das sich zwischen einer Schließposition der Oberseite des Innenraums des Fahrzeugs und einer Öffnungsposition der Oberseite des Innenraums bewegen kann, wobei die Karosseriestruktur eine obere Öffnung hat, die zwischen den Bögen (30) liegt, indem sie sich von der Vorderseite zur Rückseite des Innenraums erstreckt, und die vorgesehen ist, um durch das Dach (12), das seine Schließposition belegt, verdeckt zu werden, **dadurch gekennzeichnet, dass** auf der Rückseite der oberen Öffnung der Karosseriestruktur, die durch das zurückfaltbare Dach geschlossen werden kann, die Karosseriestruktur eine Gerüstquervorrichtung (50) zur Verbindung der seitlichen Strukturen (18) umfasst, die mit einem Teil eines hinteren Querträgers (52) zur Verbindung der hinteren unteren Enden der Bögen (30) insgesamt in Winkelform vorgesehen ist, und eine im Wesentlichen horizontale vordere Bahn (52F) und eine im Wesentlichen vertikale hintere Bahn (52R) hat, und andererseits einen vorderen Querträger (53) zur Verbindung der seitlichen Strukturen (18) vor den hinteren unteren Enden der Bögen, die eine Hauptplatte (53A) umfasst, die im Wesentlichen horizontal ist, die Reliefs oberhalb eines hinteren Raums (24) hat.

2. System nach dem vorhergehenden Anspruch, **dadurch gekennzeichnet, dass** die Querträger (52, 53) einen Zugangsraum (56) durch die Oberseite des hinteren Raums (24) festlegen.

3. System nach einem der vorhergehenden Ansprüche, **dadurch gekennzeichnet, dass** der hintere Querträger (52) einen oberen Mündungsrand (40) zum Zugang zu dem hinteren Raum (24) festlegt.

4. System nach Anspruch 2 und Anspruch 3, **dadurch gekennzeichnet, dass** der hintere Querträger (52) durch seine Enden an Futter (22, 26) der seitlichen Strukturen (18) angeschlossen ist, die die seitlichen Ränder der Mündung (40) zum Zugang zu dem hinteren Raum (24) festlegen und eine Klappe (72) tragen, die dazu bestimmt ist, die Mündung zu schließen, wobei Steuereinheiten (78, 76) der Klappe ausgebildet sind, um an den Futtern durch ein Werkzeug befestigt zu werden, das durch den Zugangsraum (56), der zwischen den Querträgern (52, 53) festgelegt ist, durchgeht.

5. System nach einem der vorhergehenden Ansprüche, **dadurch gekennzeichnet, dass** die Querträger (52, 53) einen Tragsockel von Elementen (62, 64) eines Betätigungsmechanismus des zurückfaltbaren Dachs (12) festlegen.

6. System nach einem der vorhergehenden Ansprüche, **dadurch gekennzeichnet, dass** an der Vorderseite der oberen Öffnung der Karosseriestruktur ein oberer Windschutzscheibenquerträger (43) die Vorderseite der Bögen (30) verbindet, wobei die Karosseriestruktur ihre obere Öffnung hat, die sich zwischen dem oberen Windschutzscheibenquerträger (43) und den Querträgern (52, 53) der Gerüstquervorrichtung (50) erstreckt.

7. System nach einem der vorhergehenden Ansprüche, **dadurch gekennzeichnet, dass** der hintere Raum (24) ein Kofferraum ist, der von der Karosseriestruktur unter der Gerüstquervorrichtung (50) und zwischen den seitlichen Strukturen (18) abgegrenzt ist.

8. Kraftfahrzeug mit Verdeck, das ein zurückfaltbares Dach (12) umfasst, das sich zwischen einer Schließposition der Oberseite des Innenraums des Fahrzeugs und einer Öffnungsposition der Oberseite des Innenraums bewegen kann, wobei ein Karosseriestruktursystem eine rechte seitliche Struktur (18) und eine linke seitliche Struktur (18) umfasst, die jeweils einen Himmelbogen (30) haben, der das zurückfaltbare Dach trägt, wobei die Karosseriestruktur eine obere Öffnung hat, die zwischen den Bögen (30) liegt, indem sie sich von der Vorderseite zur Rückseite des Innenraums erstreckt, und die durch das Dach, das seine Schließposition belegt, verdeckt ist, und einen hinteren Raum, der hinter dem Innenraum liegt, und der Sitze aufnimmt, die von Insassen des Innenraums verwendet werden können, **dadurch gekennzeichnet, dass** das Karosseriestruktursystem einem der vorhergehenden Ansprüche entspricht, indem seine Gerüstquervorrichtung (50) Querträger (52, 53) hat, die oberhalb des hinteren Raums liegen.

## Claims

1. A structural system for a convertible vehicle body including a right-hand lateral structure (18) and a lateral left-hand structure (18) which each have a roof arch (30) provided to support a foldable roof (12) able to move between a closure position of the top of the passenger compartment of the vehicle and an opening position of the top of the passenger compartment, the body structure having an upper opening which is between the said arches (30), extending from the front to the rear of the passenger compartment, and which is provided to be closed by the roof (12) occupying its closure position, **characterized in that**, on the rear of the upper opening of the body structure being able to be closed by the said foldable roof, the body structure includes a transverse framework device (50) for connection of the lateral structures (18) provided on the one hand with a rear cross-piece (52) for connection of the lower rear ends of the arches (30) overall in the form of an angle having a substantially horizontal front part (52F) and a substantially vertical rear part (52R), and on the other hand with a front cross-piece (53) for connection of the lateral structures (18) in front of the said lower rear ends of the arches including a substantially horizontal main plate (53A) having reliefs, above a rear compartment (24).

2. The system according to the preceding claim, **characterized in that** the cross-pieces (52, 53) determine an access space (56) by the top of the rear compartment (24).

3. The system according to any one of the preceding claims, **characterized in that** the rear cross-piece (52) determines an opening upper edge (40) for access to the rear compartment (24).

4. The system according to Claim 2 and Claim 3, **characterized in that** the rear cross-piece (52) is connected by its ends to linings (22, 26) of the lateral structures (18), which determine the lateral edges of the opening (40) for access to the rear compartment (24) and which support a flap (72) intended to close the said opening, control units (78, 76) of the flap being shaped to be fixed to the said linings by a tool passing through the access space (56) determined between the cross-pieces (52, 53).

5. The system according to any one of the preceding claims, **characterized in that** the cross-pieces (52, 53) determine a support base of elements (62, 64) of the actuating mechanism of the foldable roof (12).

6. The system according to any one of the preceding claims, **characterized in that**, at the front of the upper opening of the body structure, an upper cross-piece (43) of the windscreen connects the front of the arches (30), the body structure having its upper opening which extends between the said upper cross-piece (43) of the windscreen and the cross-pieces (52, 53) of the transverse framework device (50).

7. The system according to any one of the preceding claims, **characterized in that** the rear compartment (24) is a luggage compartment delimited by the body structure beneath the transverse framework device (50) and between the lateral structures (18).

8. A convertible vehicle comprising a foldable roof (12) being able to move between a closure position of the top of the passenger compartment of the vehicle to an opening position of the top of the passenger compartment, a body structural system including a right-hand lateral structure (18) and a left-hand lateral structure (18) which each have a roof arch (30) supporting the foldable roof, the body structure having an upper opening which is between the said arches (30), extending from the front to the rear of the passenger compartment and which is covered by the roof occupying its closure position, and a rear compartment which is behind the passenger compartment and which receives seats able to be used by occupants of the passenger compartment, **characterized in that** the body structural system is according to any one of the preceding claims, having its transverse framework device (50) with cross-pieces (52, 53) situated above the said rear compartment.
